Europäisches Patentamt

European Patent Office

Office européen des brevets

(11) Veröffentlichungsnummer: **0 213 063**
**B1**

(12) **EUROPÄISCHE PATENTSCHRIFT**

(45) Veröffentlichungstag der Patentschrift:
28.02.90

(21) Anmeldenummer: 86730126.9

(22) Anmeldetag: 12.08.86

(51) Int. Cl.⁴: **H04L 12/26**

(54) Schaltungsanordnung zur Prüfung eines passiven Busnetzsystems (CSMA/CD-Zugriffsverfahren).

(30) Priorität: 22.08.85 DE 3530262

(43) Veröffentlichungstag der Anmeldung:
04.03.87 Patentblatt 87/10

(45) Bekanntmachung des Hinweises auf die Patenterteilung:
28.02.90 Patentblatt 90/9

(84) Benannte Vertragsstaaten:
AT BE CH DE FR GB IT LI NL SE

(56) Entgegenhaltungen:
EP-A- 0 133 139
US-A- 4 380 088

ELECTRONICS DESIGN, Band 32, Nr. 15, 26. Juli 1984,
Seiten 193-198, Denville, US; R.V. BALAKRISHNAN:
"Transceiver and serial interface ICs put personal
computers on budget LAN"
MINI-MICRO CONFERENCE RECORD, 8. - 11.
November 1983, San Francisco, US, Seiten 1-17; V.
COLEMAN et al.: "The implementation of
ethernet/IEEE 802.3 in VLSI"
ELECTRONIC DESIGN, Band 33, Nr. 17, 25. Juli 1985,
Seiten 163-170, Schiphol, NL; J. SHEREFF: "Focus on
portable data-comm testers"
ELECTRONICS, Band 58, Nr. 32, 12. August 1985,
Seiten 32S-32V, New York, US; S. KABOTA: "Low-cost
testers boost acceptance of MIL-STD-1553 data bus"

(73) Patentinhaber: Siemens Aktiengesellschaft,
Wittelsbacherplatz 2, D-8000 München 2(DE)

(72) Erfinder: Goerne, Jan, Dipl.-Ing.,
Heinrich-Vogl-Strasse 8, D-8000 München 71(DE)
Erfinder: Kozilek, Joseph, Dipl.-Ing.,
Konrad-Celtis-Strasse 65, D-8000 München 70(DE)
Erfinder: Moustakas, Steven, Dr., Schellingstrasse 19,
D-8000 München 40(DE)

**Beschreibung**

Passive Busnetzsysteme weisen als Übertragungsmedium unter anderem Koaxialkabel auf, an die Stationen über passive Medien-Anschlußeinheiten angeschlossen sind. Wegen der Dämpfung und der begrenzten Bandbreite des Koaxialkabels ist die Länge eines Koaxialkabelsegmentes derzeit auf ca. 500 m begrenzt. Die Stationen sind mit den Medien-Anschlußeinheiten über spezielle Sende-Empfangskabel, die als verdrillte Leitungen ausgeführt sind, verbunden, deren Länge aus gleichen Gründen auf ca. 50 m begrenzt ist.

Passive Busnetzsysteme arbeiten z. B. nach dem CSMA/CD (Carrier Sense Multiple Access with Collisions Detection)-Prinzip. Dies beinhaltet, daß jede Station Datenpakete von allen anderen Stationen durch die jeweils zugehörige Medien-Anschlußeinheit empfängt. Der Begriff "Multiple Access" bedeutet, daß alle Stationen dieses passiven Busnetzes ohne zentrale Steuerung einen gleichberechtigten Zugriff zum Busnetz haben. Von einer Station kann über die entsprechend zugehörige Medien-Anschlußeinheit nur dann gesendet werden, wenn über das passive Busnetzsystem gerade keine Dateninformationen ausgetauscht werden. Das gleichzeitige Senden von mehreren Stationen führt zu einer sogenannten Kollision. Dieser Zustand wird durch eine Kollisions-Erkennungsschaltung in der Medien-Anschlußeinheit von jeder sendenden Station durch Pegelüberwachung am Übertragungsmedium erkannt und führt umgehend zur Unterbrechung des Aussendens von Daten. Danach werden nach einer in ihrer Dauer stochastisch bestimmten Warteperiode wiederholt Sendeversuche · von der Station unternommen.

Ein derart ausgestaltetes Busnetz mit Koaxialkabelsegmenten und Medien-Anschlußeinheit ist aus der Druckschrift "Electronics Design", Band 32, Nr. 15, 26. Juli 1984, Seiten 193 bis 198, Denville, US, R.V. Balakrishnan: "Transceiver and serial interface ICs put personal computers on budget LAN " bekannt.

Zur Prüfung derartiger passiver Busnetze werden derzeit aufwendige Isolations- und Reflexionsmessungen mit Zeitreflektometern nur am Koaxialkabelsegment durchgeführt, um den ordnungsgemäßen Zustand der Übertragungsstrecke feststellen zu können. Bei dieser Art der Prüfungen sind keine Aussagen über die Betriebsfunktion der an den Koaxialkabelsegmenten angeschlossenen Stationen möglich.

Aus einer europäischen Patentanmeldung 0 133 139 ist eine Einrichtung zum Betrieb eines mit mehreren Stationen angeschlossenen Busnetzes bekannt. Mit Hilfe dieser Einrichtung werden Kollisionen von Informationen auf dem Bussystem simuliert, um unterschiedliche Funktionen des Busnetzes während des Betriebs zu überprüfen.

Im US-Patent 4 380 088 ist ein Tester eines Kollisionsdetektors offenbart, der in der jeweiligen Medien-Anschlußeinheit eines Busnetzes angeordnet ist. Hierbei werden während des Betriebes nach jedem Feststellen des Endes der übermittelten Informationen Kollisionssignale gebildet und an die Empfangseinrichtung der jeweiligen Station übermittelt. Bei ordnungsgemäß reagierender Empfangseinrichtung wird die gewollte Kollision festgestellt und an die Station gemeldet. Wird diese gewollte Kollision nach Ende der Nachrichtenübermittlung nicht an die Station gemeldet, so kann eine defekte Kollisionserkennungsschaltung bzw. Empfangseinrichtung angenommen werden.

Die der Erfindung zugrundeliegende Aufgabe besteht darin, bereits bei der Installation des passiven Busnetzsystems in einfacher Weise die Hauptfunktionen, wie z. B. Senden und Empfangen der Datenpakete über das jeweilige Koaxialkabelsegment sowie die Fehlerzustände beim Kollisions-Betrieb und die Kollisions-Erkennungsbereitschaft der jeweiligen Medien-Anschlußeinheiten unter betriebsähnlichen Bedingungen vorab zu prüfen. Erfindungsgemäß wird dies durch die Kombination der Merkmale des Anspruchs 1 erreicht.

Mit der erfindungsgemäßen Schaltungsanordnung, die neben der Datensende- und Empfangseinrichtung die Zustands-Empfangseinrichtung enthält, mit der der Fehlerzustand der Datenkollision und die Erkennungsbereitschaft innerhalb der Medien-Anschlußeinheit abgeprüft werden kann, können in einfacher Weise sämtliche zur Funktionsüberprüfung notwendigen Schaltzustände erzeugt und die entsprechenden Schaltfolgen in den am Koaxialkabelsegment angeschalteten Medien-Anschlußeinheiten herbeigeführt werden. Mit der Datenempfangseinrichtung können im Hinblick auf den Abschlußwiderstand außerdem fehlerhafte Koaxialkabelsegmente festgestellt werden, indem die von der Datensendeeinrichtung ausgesendeten Datenpakete als nicht gewünschte Reflexionssignale empfangen werden. Auch nicht vorschriftsmäßig mit dem Koaxialkabelsegment in Verbindung stehende Medien-Anschlußeinheiten lassen sich durch entsprechende Schaltfolgen, bzw. durch Ausbleiben derselben, problemlos ermitteln.

Werden zwei der erfindungsgemäßen Schaltungsanordnungen gemeinsam an eine Koaxialkabelsegment angeschaltet, so kann außerdem die sogenannte Kollisions-Erkennungseigenschaft der installierten Medien-Anschlußeinheit getestet werden. Durch Einstellung der zweiten Schaltungsanordnung nur auf Daten-Empfang kann überprüft werden, ob eine der Medien-Anschlußeinheiten zufällig das sogenannte Heartbeat-Signal erzeugt, nachdem die Datenpakete über das Koaxialkabelsegment von der entsprechenden Medien-Anschlußeinheit empfangen werden. Durch die aus den drei monostabilen Kippstufen gebildete Entscheidungsstufe kann außerdem das Heartbeat-Signal und daß Kollisionssignal innerhalb der erfindungsgemäßen Schaltungsanordnung optisch zur Anzeige gebracht werden. Als wesentlich für die Erfindung ist anzusehen, daß sowohl die empfangenen Datenpakete als auch der Kollisionsempfang über entsprechende Ausgänge zugänglich sind, um in Verbindung beispielsweise mit einem Oszilloskop, weitergehende Untersuchungen der entsprechenden Signaleingänge vornehmen zu können.

Gemäß einer vorteilhaften Ausgestaltung der Erfindung ist auch die Schalteinrichtung der Datensendeeinrichtung mit einer monostabilen Kippstufe verbunden, so daß, beispielsweise über eine LED-Anzeige, auch die gesendeten Datenpaketimpulsfolgen optisch zur Anzeige gebracht werden können. Außerdem kann die Datenpaketimpulsfolge auch als Triggerausgangssignal zur Anschaltung weiterer Meßgeräte genutzt werden.

Durch die vorteilhafte Ausgestaltung der Erfindung gemäß Anspruch 4 wird erreicht, daß innerhalb der Datenempfangseinrichtung ebenfalls die empfangenen Datenpaketimpulsfolgen optisch angezeigt werden können.

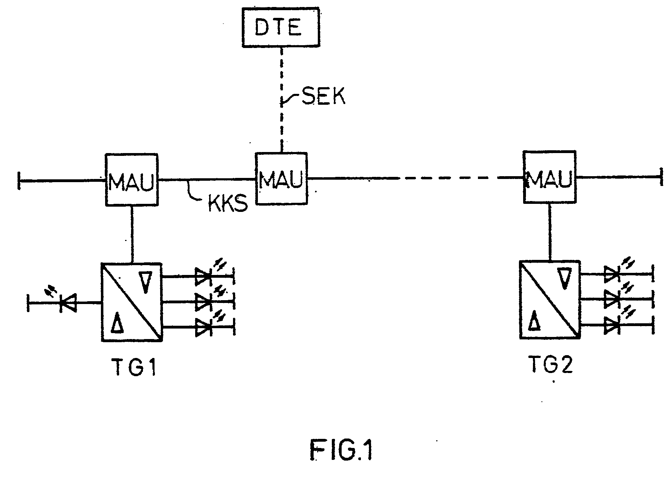

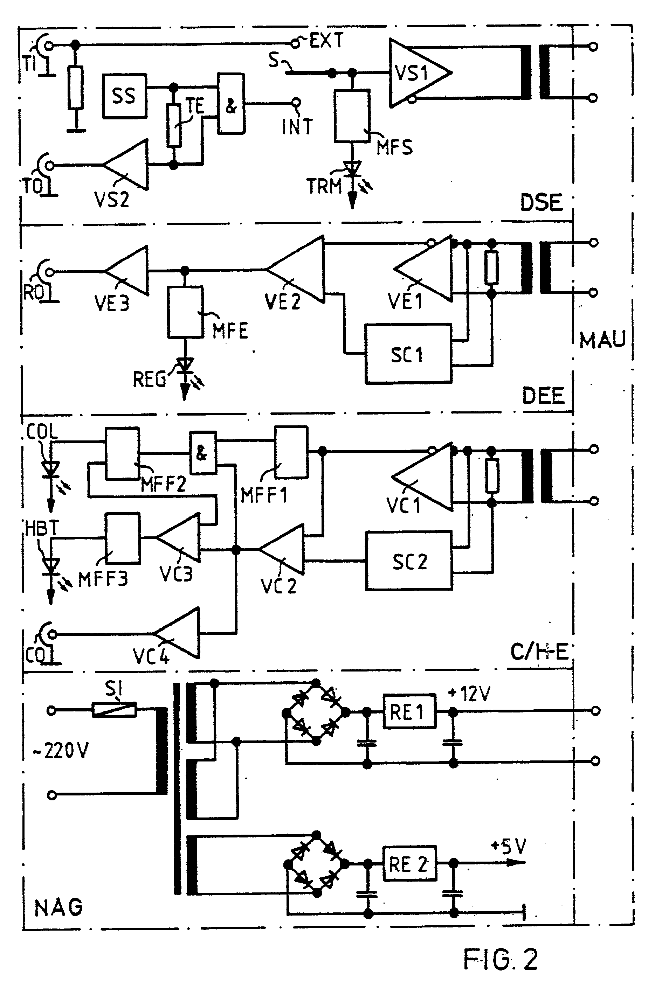

Die Erfindung wird anhand eines figürlich dargestellten Ausführungsbeispiels näher erläutert, wobei in der Figur 1 die Schaltungsanordnung zur Prüfung des passiven Busnetzsystems in vereinfachter Darstellung gezeigt ist, während die Figur 2 Einzelheiten der erfindungsgemäßen Schaltunganordnung erkennen läßt.

In der Figur 1 ist ein Koaxialkabelsegment KKS dargestellt, das unmittelbar die jeweiligen Medien-Anschlußeinheiten MAU miteinander verbindet. Das Koaxialkabel ist an beiden Enden mit einem entsprechenden Abschlußwiderstand versehen, um an diesen Stellen die übertragenen Signale reflexionsfrei zu vernichten. Weiterhin ist erkennbar, daß jede Station DTE über ein gesondertes Sende-Empfangskabel SEK mit der Medien-Anschlußeinheit MAU verbunden ist, um so den Datenaustausch mit anderen, nicht dargestellten Stationen über das Koaxialkabelsegment KKS vornehmen zu können.

Eine der möglichen Testkonfigurationen sieht so aus, daß eine Schaltungsanordnung zur Prüfung des Busnetzsystems als Testgerät TG1 in gleicher Weise wie eine Station DTE über die Medien-Anschlußeinheit MAU mit dem Koaxialkabelsegment KKS verbunden ist und daß mehrere weitere Medien-Anschlußeinheiten MAU ohne Verbindung zu Stationen mit dem Übertragungsmedium in Verbindung stehen. Durch das gezielte Aussenden der Datenpaketinformationen und eine entsprechende Auswertung der Empfangssignale kann eine Beschädigung des Koaxialkabelsegmentes bzw. das Fehlen eines ordnungsgemäßen Leitungsabschlußwiderstandes festgestellt werden. Dies ist der Fall, wenn bei der Datenübertragung und dem Empfang der Daten zusätzlich der Kollisionszustand auftritt. Eine nicht richtig angeschlossene Medien-Anschlußeinheit würde andererseits dadurch erkannt, daß der Datenempfang unterbrochen und gleichzeitig der Kollisionszustand innerhalb der Testeinrichtung TG1 signalisiert wird.

Wird an das Koaxialkabelsegment KKS ein zweites Testgerät TG2 angeschlossen, so kann der Zustand der Kollisions-Erkennungsschaltung der zu prüfenden Medien-Anschlußeinheit MAU dadurch überwacht werden, daß erste das Testgerät TG1 Daten aussendet und das zweite Testgerät TG2 die Daten empfängt. Wird trotz des Empfangs der Datenpakete von der zu überwachenden Medien-Anschlußeinheit MAU das sogenannte Heartbeat-Signal nicht empfangen, so liegt der entsprechende Fehlerfall vor.

Werden die beiden Testgeräte TG1 und TG2 auf das Aussenden von Daten eingestellt, so wird der Fehlerzustand "Kollision" auf dem Koaxialkabelsegment KKS erzeugt und kann durch die entsprechend vorhandenen optischen Anzeigemittel innerhalb der Testgeräte TG1 und TG2 abgelesen werden.

Die Figur 2 zeigt nähere Einzelheiten der erfindungsgemäßen Schaltungsanordnung, die im wesentlichen aus einer Datensendeeinrichtung DSE, einer Datenempfangseinrichtung DEE und einer Zustands-Empfangseinrichtung C/H-E besteht. Sämtliche Einrichtungen sind über nicht näher bezeichnete Übertrager mit der Medien-Anschlußeinheit MAU gleichstromfrei gekoppelt. Die Datensendeeinrichtung DSE ist mit einer Schwingstufe SS ausgestattet, die mit Hilfe einer Teileinrichtung TE und einem Und-Verbindungsglied über eine erste Leitung INT Datenpakete mit definierter Bitrate erzeugt. Sofern eine Schalteinrichtung S mit der ersten Leitung INT verbunden ist, werden diese Datenpakete mit definierter Bitrate über eine erste Verstärkerstufe VS1 an die Medien-Anschlußeinheit MAU übertragen. Außerdem ist die Schalteinrichtung S mit einer monostabilen Kippstufe MFS verbunden, über die mit Hilfe einer nachgeschalteten Anzeigeeinrichtung TRM die gesendeten Datenpaketimpulsfolgen optisch zur Anzeige gebracht werden können.

Der Teileinrichtung TE ist außerdem eine zweite Verstärkereinrichtung VS2 nachgeschaltet, um die Datenpaketimpulsfolge als sogenanntes Triggersignal TO auswerten zu können. Außerdem ist in der Datensendeeinrichtung DSE eine zweite Leitung EXT vorgesehen, die an einen Übertragungseingang TI mit beliebiger Datenpaketimpulsfolge und Bitrate angeschlossen ist.

Die Datenempfangseinrichtung DEE ist mit einer ersten störimpulsunterdrückenden Schwellwertschaltung SC1 ausgestattet, die in Verbindung mit der Verstärkereinrichtung VE1, 2, 3 die empfangenen Datenpakete impulsweise an einen Empfangsausgang RO überträgt und zusätzlich mit Hilfe einer monostabilen Empfangskippstufe MFE die empfangenen Datenpaketimpulsfolgen an eine optische Anzeigeeinrichtung REC abgibt.

Weiterhin ist innerhalb der Schaltungsanordnung eine Zustands-Empfangseinrichtung C/H-E vorgesehen, die mittels einer zweiten Störimpulse unterdückenden Schwellwertschaltung SC2 und einer Zustandsverstärkereinrichtung VC1, VC2, VC3 in Verbindung mit einer aus den drei monostabilen Kippstufen MF1, 2, 3 gebildeten Entscheidungsschaltung das Heartbeat-Signal und das Kollisionssignal weiterer optischen Anzeigeeinrichtungen HBT bzw. COL und über eine vierte Verstärkerstufe VC4 dem Kollisionsempfangsausgang CO zuführt.

Anschließend werden die funktionellen Einzelheiten der entsprechenden Einrichtungen näher erläutert. Mit Hilfe der Schalteinrichtung S der Datensendeeinrichtung DSE besteht die Möglichkeit, zwei Arten von Datenpaketen über das Sende-Empfangskabel SEK (dargestellt in Figur 1) in das CSMA/CD-Busnetsystem zu übertragen. Ist die Schalteinrichtung S mit der ersten Leitung INT verbunden, so können die innerhalb der Datensendeeinrichtung DSE erzeugten Datenpakete beispielsweise mit einer Bitrate von zehn Mbit/s und einer Paketlänge von 12,8 µs erzeugt werden und über einer nicht näher bezeichneten Übertrager in das entsprechende Sende-Empfangskabel SEK eingespeist werden. Der Abstand zwischen den Datenpaketen beträgt ebenfalls 12,8 µs. Die dafür notwendigen Impulse werden mit einer Schwingstufe SS erzeugt, die als Quarzoszillator ausgeführt ist. Die Impulse haben eine Periodendauer von 200 ns bei einem Tastverhältnis von 50 %. Durch die Teileinrichtung TE, die zweistufig ausgeführt ist, werden die Impulse mit einer Periodendauer von 25,6 µs erzeugt, die gleichzeitig das Rahmensignal bilden. Außerdem werden diese Impulse dem Triggerausgangssignal TO für Meßzwecke zur Verfügung gestellt. Die Paketlänge ist so gewählt, daß die minimal vorgeschriebene Paketlänge von 51,2 µs (IEEE Standard 802.3 - 1985) unterschritten wird, um beispielsweise zufällig während des Testverfahrens angeschlossene Stationen für den Datenempfang und die Auswertung auszuschließen.

Sobald die Schalteinrichtung S mit der zweiten Leitung EXT verbunden ist, kann die Schaltungsanordnung mit Hilfe eines Generators beliebige Impulsfolgen mit beliebiger Bitrate zu Prüfzwecken über das Busnetzsystem übertragen. Dieses Ausgangssignal wird in gleicher Weise über den nicht bezeichneten Übertrager gleichstromfrei in das Sende-Empfangskabel SEK (Figur 1) eingespeist.

Die Datenpakete, die über die Medien-Anschlußeinheit MAU auf das Sende-Empfangskabel SEK gelangen, werden gleichstromfrei ebenfalls über den nicht bezeichneten Übertrager zur Verstärkereinrichtung VE1, 2, 3 der Datenempfangseinrichtung DEE geführt. Mit der ersten Störimpuls unterdrückenden Schwellwertschaltung SC1 wird verhindert, daß nicht zulässige Störimpulse mit einer Amplitude bis zu maximal 160 mVss am entsprechenden Ausgang erscheinen. Solange die ankommenden Impulse nicht die vorgeschriebene Amplitude und Dauer haben, sperrt die erste Schwellwertschaltung SC1 die weitere Auswertung des Signals.

Die Zustands-Empfangseinrichtung C/H-E unterscheidet sich von der Datenempfangseinrichtung DEE durch eine zusätzliche Entscheidungsschaltung MFF2, MFF3, die bestimmt, ob die empfangenen Impulse dem Heartbeat oder einer Kollision entsprechen. Dieses Heartbeat-Signal ist eine Selbsttestfunktion der Medien-Anschlußeinheit MAU, die in der angeschlossenen Station den Zustand der Kollisionserkennungsschaltung anzeigt. Dies geschieht durch Aussenden eines bestimmten Signals über das Sende-Empfangskabel nach jeder erfolgreich abgesetzten Datenpaketsendung.

Der Fehlerzustand "Kollision" liegt dann vor, wenn innerhalb des passiven Busnetzsystems auf dem Koaxialkabelsegment gleichzeitig zwei oder mehrere Stationen zu senden versuchen. Dieser Fehlerzustand der Kollision kann auch im Testverfahren zur Prüfung des Busnetzsystems durch Einsatz von zwei Testgeräten erzeugt werden, in dem beide Testgeräte auf Senden eingestellt werden. Solange eine Medien-Anschlußeinheit MAU diesen Zustand der Kollision erkennt, sendet diese das Kollisionssignal über das Sende-Empfangskabel zur Station bzw. zum angeschalteten Testgerät. Das Heartbeat-Signal und das Kollision-Signal sind bezüglich der elektrischen Eigenschaften identisch. Sie haben beispielsweise eine Frequenz von 10 MHz und ein Tastverhältnis um 50 % Der Unterschied zwischen diesen beiden Signalen besteht lediglich in der Signaldauer. Während das Heartbeat-Signal beispielsweise eine Länge von 1 µs hat, ist die Länge des Kollision-Signals theoretisch unbegrenzt, denn es wird immer erzeugt, solange innerhalb des passiven Busnetzsystems eine Datenkollision vorliegt.

Während der Prüfung verhält sich das Testgerät wie eine Station und unterscheidet lediglich die ankommenden Impulse auf ihre unterschiedliche Länge. Dabei besteht die Zustands-Entscheidungsstufe C/H-E aus drei monostabilen Kippstufen MFF1, 2, 3 und zwei LED-Anzeigen. Weil die Heartbeat-Impulse wegen der Frequenz der sich wiederholenden Datenpakete eine höhere Erscheinungswahrscheinlichkeit haben, wird in erster Linie geprüft, ob die im Testgerät ankommende Impulse an der Zustands-Empfangseinrichtung das Heartbeat-Signal HBT bilden. Zu diesem Zweck blockiert schon der erste ankommende Impulse für beispielsweise 5 µs die zweite monostabile Kippstufe MFF2, die die Kollisionsanzeige steuert und öffnet für 5 µs die dritte monostabile Kippstufe MFF3, die das Heartbeat-Signal auf der entsprechenden LED-Anzeige HBT optisch kenntlich macht. Die erste monostabile Kippstufe MFF1 wird als Verzögerungsglied verwendet, welches die Zeit t=5 µs erzeugt und direkt von der ersten Verstärkerstufe VC1 gesteuert wird. Erst die Impulse, die in Amplitude und Dauer der Norm entsprechen - dies wird mit Hilfe der zweiten störimpulsunterdrückenden Schwellwertschaltung SC2 geprüft - werden in der Entscheidungsstufe verarbeitet. Solange die Kollision-Signal-Dauer kürzer als 5 µs ist, ändert die zweite monostabile Kippstufe MFF2 ihren Zustand nicht, so daß die dritte monostabile Kippstufe MFF3 die LED-Anzeige HBT ansteuert. Wenn die Kollision-Signal-Dauer die Zeit von 5 µs überschreitet, ändert die zweite monostabile Kippstufe MFF2 ihren Zustand, steuert dadurch die LED-Anzeige COL, und sperrt gleichzeitig den Eingang der dritten monostabilen Kippstufe MFF3.

Das Netzanschlußgerät NAG erzeugt in bekannter Weise zwei getrennte Gleichspannungen, wobei die erste Gleichspannung von beispielsweise +12 V zur Versorgung der Medien-Anschlußeinheit MAU dient, während die zweite Gleichspannung von beispielsweise +5 V zur Versorgung der Datensende- und Empfangseinrichtung DSE, DEE und der Zustands-Empfangseinreichtung C/H-E dient.

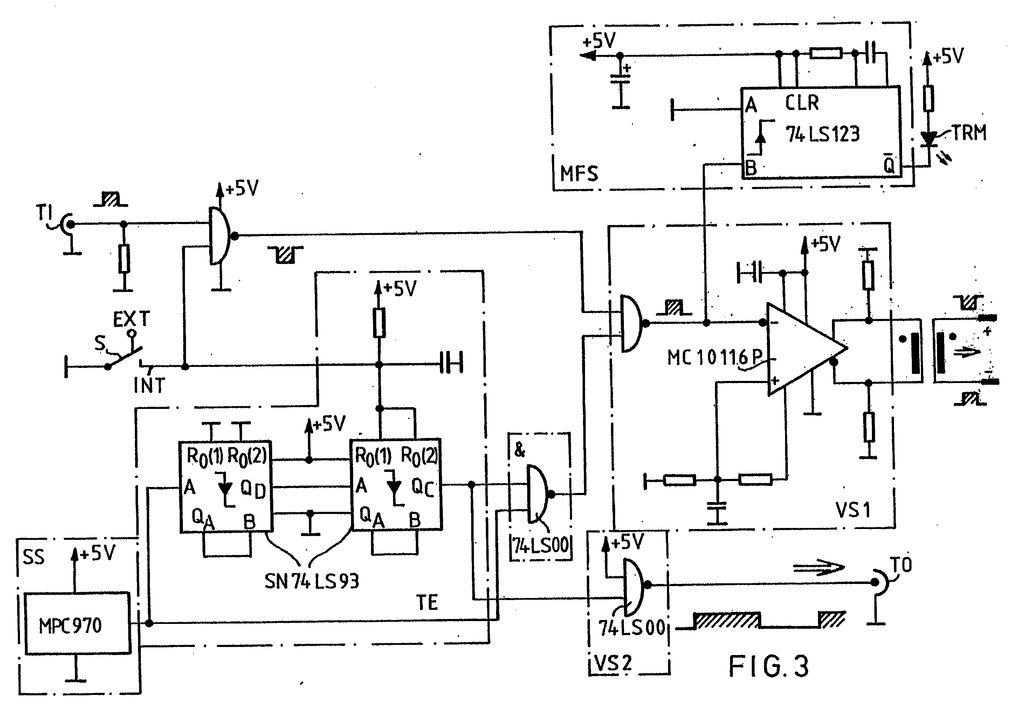

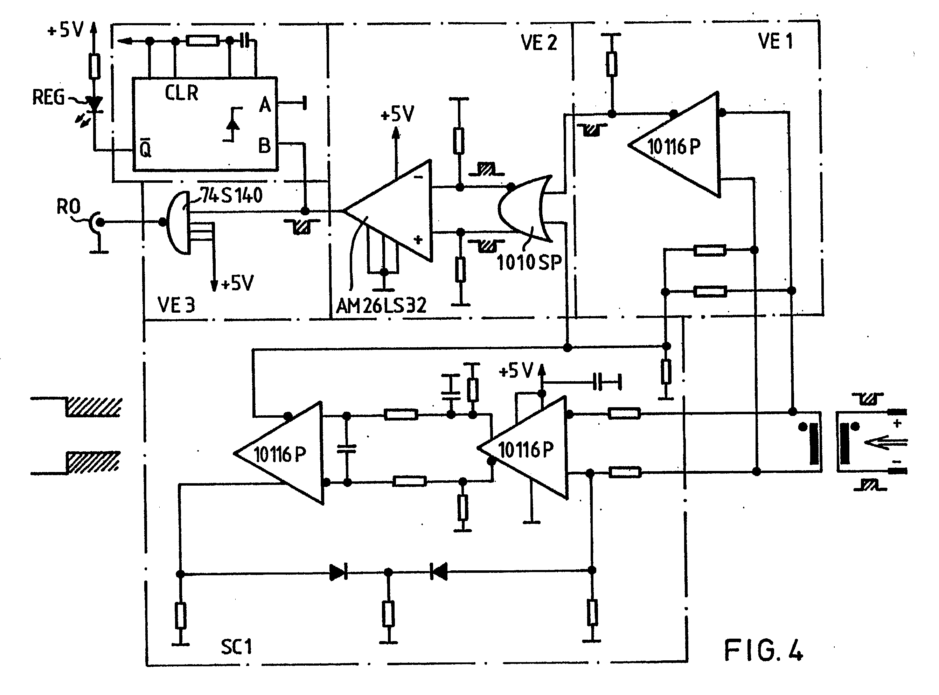

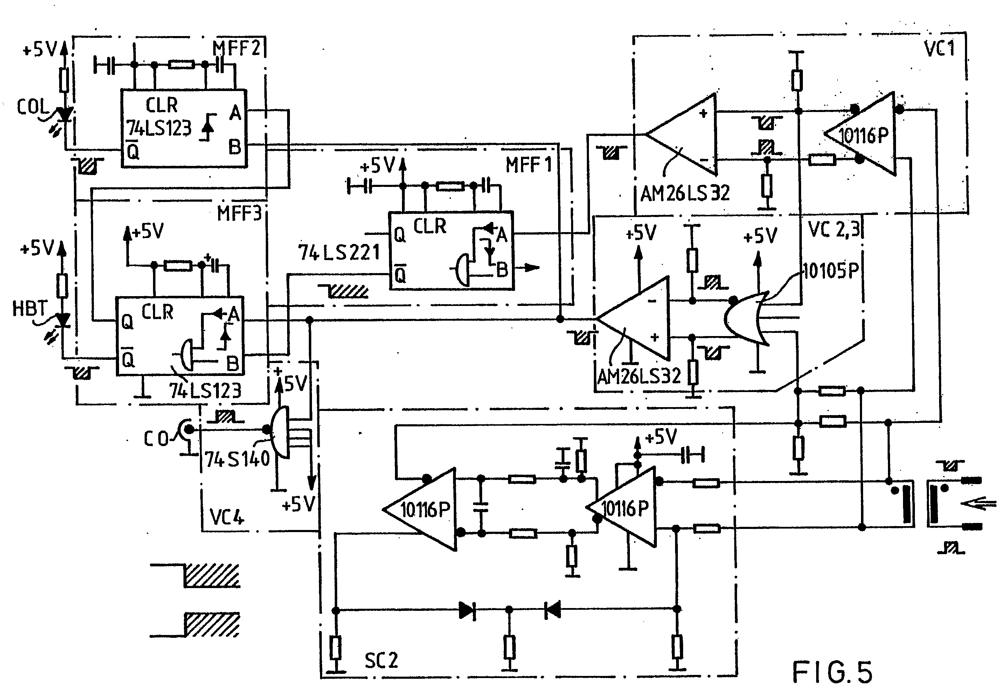

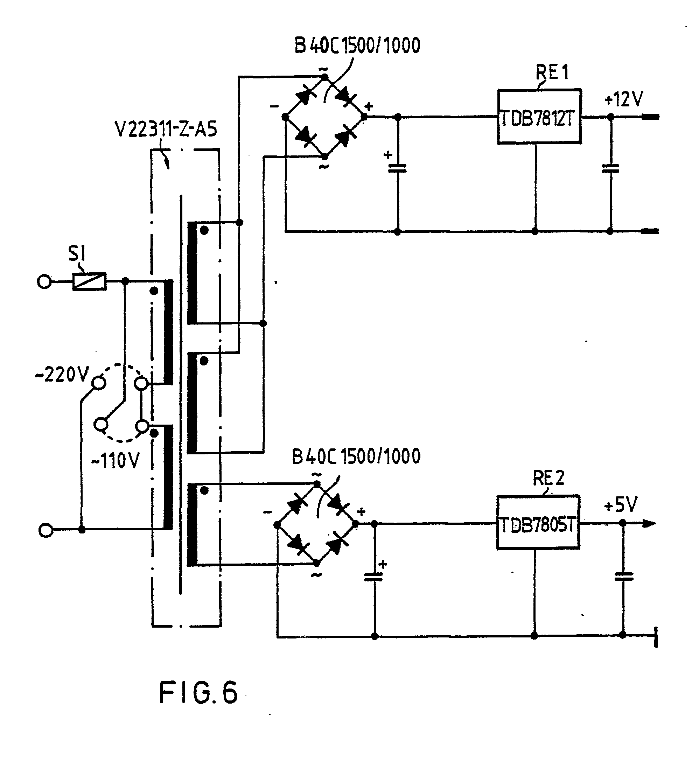

Die im Ausführungsbeispiel beschriebenen Funktionseinrichtung sind in den Figuren 3 bis 6 im Einzelnen dargestellt, wobei für die Bauelemente die firmenmäßigen Bezeichnungen eingetragen sind.

Figur 3 zeigt die Datensendeeinrichtung DSE und
Figur 4 die Datenempfangseinrichtung DEE. Desweiteren ist in
Figur 5 die Zustands-Empfangseinrichtung C/H-E und in

Figur 6 ein Ausführungsbeispiel für das Netzanschlußgerät (NAG) dargestellt.

**Patentansprüche**

1. Schaltungsanordnung zur Prüfung eines passiven Busnetzsystems mit an ein Koaxialkabelsegment über Medien-Anschlußeinheiten anschaltbaren Stationen, die den Datenpaketaustausch über das Koaxialkabelsegment mit dem CSMA/CD (Carrier Sense Multiple Access with Collision Detection)-Zugriffsverfahren realisieren, und die Schaltungsanordnung

- eine mit der Medien-Anschlußeinheit (MAU) gleichstromfrei gekoppelte Datensendeeinrichtung (DSE) mit einer ersten Verstärkereinrichtung (VS1) aufweist, die mittels einer Schalteinrichtung (S) intern über eine erste Leitung (INT) mit einer Schwingstufe (SS) und einer Teileinrichtung (TE) zur Erzeugung der Datenpakete mit definierter Bitrate und extern über eine zweite Leitung (EXT) mit einem Übertragungseingang (TI) mit beliebiger Datenpaketimpulsfolge und beliebiger Bitrate verbindbar ist, wobei die Schalteinrichtung (S) mit einer monostabilen Kippstufe (MFS) zur optischen Anzeige der gesendeten Datenpaketimpulsfolgen (TRM) und die Teileinrichtung (TE) mit einer zweiten Verstärkereinrichtung (VS2) zur Ausgabe der Datenpaketimpulsfolge als Triggerausgangssignal (TO) verbunden ist,

- eine mit der Medien-Anschlußeinheit (MAU) gleichstromfrei gekoppelte Datenempfangseinrichtung (DEE) aufweist, die mittels einer ersten Störimpulse unterdrückenden Schwellwertschaltung (SC1) die über eine Verstärkereinrichtung (VE1, 2, 3) empfangenen Datenpakete impulsweise an einen Empfangsausgang (RO) überträgt, wobei die Verstärkereinrichtung (VE1, 2, 3) mit einer monostabilen Empfangskippstufe (MFE) zur optischen Anzeige der empfangenen Datenpaketimpulsfolgen (REC) verbunden ist und

- mit einer mit der Medien-Anschlußeinheit (MAU) gleichstromfrei gekoppelten, den Datenpaketempfang auf Zustand "Kollision" und Zustand "Kollisions-Erkennungsschaltung" (Heartbeat-Signal) überwachenden Zustands-Empfangseinrichtung (C/H-E) ausgestattet ist, die mittels einer zweiten Störimpulse unterdrückenden Schwellwertschaltung (SC2) und einer aus drei monostabilen Kippstufen (MFF1, 2, 3) gebildeten Entscheidungsschaltung das Heartbeat-Signal und das Kollisionssignal an jeweils eine optische Anzeigeeinrichtung (HBT bzw. COL) und einen Kollisionsempfangsausgang (CO) überträgt.

2. Schaltungsanordnung nach Anspruch 1, gekennzeichnet durch ein Netzanschlußgerät (NAG), das eine erste Versorgungsspannung (+12 V) für die Medien-Anschlußeinheit (MAU) und eine zweite Versorgungsspannung (+5 V) für die Datensende- und Empfangseinrichtung (DSE, DEE) sowie die Zustands-Empfangseinrichtung (C/H-E) erzeugt.

**Claims**

1. Circuit arrangement for testing a passive bus network with stations which can be connected to a coaxial cable segment via media-connecting units, which stations realize the data packet exchange via the coaxial cable segment using the CSMA/CD (carrier sense multiple access with collision detection) access method, and the circuit arrangment

- has a data transmission device (DSE), which is coupled free of DC current to the media-connecting unit (MAU), and has a first amplifier device (VS1) which can be connected by means of a switching device (S) internally via a first line (INT) with an oscillating stage (SS) and a sub-unit (TE) for generating the data packets with a defined bit rate and which can be connected externally via a second line (EXT) to a transmission input (TI) with any desired data packet pulse sequence and any desired bit rate, the switching device (S) being connected to a monostable toggle element (MFS) for visually displaying the transmitted data packet pulse sequences (TRM) and the sub-unit (TE) being connected to a second amplifier device (VS2) for issuing the data packet pulse sequence as a trigger output signal (TO),

- has a data reception device (DEE), which is coupled free of DC current to the media-connecting unit (MAU), and transfers the data packets received via an amplifier device (VE1, 2, 3) pulse by pulse to a reception output (RO) by means of a first threshold value circuit (SC1) which suppresses interference pulses, the amplifier device (VE1, 2, 3) being connected to a monostable receive toggle element (MFE) for visually displaying the received data packet pulse sequences (REC) and

- is equipped with a status-reception device (C/H-E), which is coupled free of DC current to the media-connecting unit (MAU), monitors the data packet reception for the "collision" status and the "collision detection circuit" status (heartbeat signal) and transfers the heartbeat signal and the collision signal to, in each case, a visual display unit (HBT or COL) and a collision reception output (CO) by means of a second threshold value circuit (SC2) which suppresses interference pulses and of a decision circuit formed by three monostable toggle elements (MFF1, 2, 3).

2. Circuit arrangement according to Claim 1, characterized by a mains connecting unit (NAG), which generates a first supply voltage (+ 12 V) for the media-connecting unit (MAU) and a second supply voltage (+ 5 V) for the data transmission and reception device (DSE, DEE) as well as the status-reception device (C/H-E).

**Revendications**

1. Montage pour tester un système formant réseau de bus passif, comportant des postes, qui peuvent être raccordés à un segment de câble coaxial par l'intermédiaire d'unités de raccordement à un milieu et réalisent l'échange de paquets de données par l'intermédiaire du segment de câble coaxial, conformément au procédé d'accès CSMA/CD (Carrier Sense Multiple Access with Collision Detection, c'est-à-dire détection de signal avec accès multiple et détection de collision), le montage comportant

- un dispositif (DSE) d'émission de données, accouplé, sans courant continu, à l'unité (MAU) de raccordement à un milieu et possédant un premier dispositif amplificateur (VS1), qui peut être relié, de façon interne, au moyen d'un dispositif de commutation (S), par l'intermédiaire d'une première ligne (INT) à un étage oscillateur (SS) et à un dispositif partiel (TE) servant à produire les paquets de données avec une cadence binaire définie, et, de façon externe, par l'intermédiaire d'une seconde ligne (EXT), à une entrée de transmission (TI) fonctionnant avec une suite quelconque d'impulsions de paquets de données et une cadence binaire quelconque, le dispositif de commutation (S) étant relié à un étage à bascule monostable (MSF) servant à réaliser l'affichage optique des suites émises d'impulsions de paquets de données (TRM), et le dispositif partiel (TE) étant relié à un second dispositif amplificateur (VS2) servant à délivrer la suite d'impulsions de paquets de données sous la forme d'un signal de sortie de déclenchement (TO),

- un dispositif de réception de données (DE), accouplé, sans courant continu, à une unité (MAU) de raccordement à un milieu et transmettant de façon impulsionnelle, au moyen d'un premier circuit à valeur de seuil (SC1) supprimant les impulsions parasites, les paquets de données reçus par l'intermédiaire d'un dispositif amplificateur (VE1, 2, 3), à une sortie de réception (RO), le dispositif amplificateur (VE1, 2, 3) étant relié à un étage à bascule monostable de réception (MFE) servant à réaliser l'affichage optique des suites reçues d'impulsions de paquets de données (REC), et

- est équipé d'un dispositif de réception d'états (C/H-E), qui est accouplé, sans courant continu, à l'unité (MAU) de raccordement à un milieu, contrôle la réception des paquets de données pour établir s'ils présentent l'état "collision" et l'état "circuit d'identification de collision" (signal Heartbeat) et transmet, au moyen d'un second circuit à valeur de seuil (SC2) supprimant les impulsions parasites, et d'un circuit de décision formé par trois étages à bascule monostable (MFF1, 2, 3), le signal Heartbeat et le signal de collision à un dispositif d'affichage optique respectif (HBT ou COL) et à une sortie de réception de collisions (CO).

2. Montage suivant la revendication 1, caractérisé par un appareil (NAG) de raccordement au secteur, qui produit une première tension d'alimentation (+12 V) pour l'unité (MAU) de raccordement à un milieu et une seconde tension d'alimentation (+5 V) pour le dispositif (DSE, DEE) d'émission et de réception de données, ainsi que pour le dispositif de réception d'états (C/H-E).

FIG.1

FIG. 2

FIG.3

FIG. 4

FIG.5

FIG.6